# FASCICULE DE BREVET EUROPEEN

(11) **EP 3 904 783 B1**
(45) Date de publication et mention de la délivrance du brevet: **28.08.2024**
(21) Numéro de dépôt: 21170499.4
(22) Date de dépôt: 26.04.2021
(51) Int. Cl.: F24H 4/04, F24H 9/02

(54) **INSTALLATION DE CHAUFFAGE D'EAU CHAUDE SANITAIRE**
BRAUCHWASSER-HEIZANLAGE
FACILITY FOR HEATING DOMESTIC HOT WATER

(30) Priorité: 30.04.2020 FR 2004339
(43) Date de publication de la demande: 03.11.2021
(73) Titulaire: Compagnie Industrielle des Chauffe-Eau, 68300 Saint-Louis (FR)
(72) Inventeur: BOURDIN, Yvan, 90110 SAINT-GERMAIN-LE-CHATELET (FR); ANTOINE, Florian, 90000 BELFORT (FR); GEOFFROY, Cédric, 68700 CERNAY (FR)
(74) Mandataire: Plasseraud IP

(56) Documents cités:
- EP-A1- 3 091 305
- WO-A1-2015/004101
- US-A1- 2016 109 156

## Description

### Domaine technique

L'invention se rapporte à une installation de chauffage d'eau, notamment d'eau sanitaire, comportant un chauffe-eau et un système de pompe à chaleur.

### Technique antérieure

De nos jours, il est connu d'équiper une habitation d'une installation pour chauffer l'eau sanitaire destinée à alimenter en eau chaude des points d'eau d'une habitation. Avantageusement, l'installation comprend un chauffe-eau, muni d'un réservoir d'eau, ainsi qu'un système de pompe à chaleur, comportant notamment un compresseur, un condenseur, un détendeur et un évaporateur, faisant partie d'une boucle thermodynamique.

Dans cette boucle thermodynamique, circule un fluide de travail qui est mis en mouvement et comprimé dans le compresseur, puis subit une condensation dans le condenseur avant d'être détendu dans le détendeur et enfin subit une évaporation dans l'évaporateur en prélevant les calories à l'air le traversant. Cet air est prélevé dans une source froide grâce à un ventilateur dont la fonction est d'assurer un débit d'air en vainquant les pertes de charges du circuit aéraulique et de l'évaporateur.

L'évaporateur et le condenseur sont des échangeurs de chaleur, dans chacun desquels le fluide de travail échange partiellement son énergie thermique avec un autre fluide. Le réservoir d'eau du chauffe-eau est alors chauffé par le condenseur, par l'intermédiaire par exemple d'un élément enroulé autour du réservoir.

Dans un agencement connu, un habillage extérieur assure le logement du réservoir d'eau dans un compartiment, certains éléments du système de pompe étant disposés sur un socle plat, horizontal, situé au-dessus du réservoir d'eau.

Cette configuration présente néanmoins les inconvénients d'engendrer des surcoûts, et de nécessiter des pièces de grandes dimensions qui vibrent, du fait de la présence de la pompe à chaleur, ce qui peut s'avérer inconfortable pour les utilisateurs de l'habitation. De plus, il est difficile de maîtriser l'étanchéité de ce type d'installation Un autre inconvénient est que cette configuration n'est pas optimisée pour une utilisation en air ambiant, par exemple dans un cellier ou un garage, alors même que ce genre d'installation est justement souvent placée dans le cellier ou le garage.

WO 2015004101 A1 et EP 3091305 A1 divulguent des exemples de chauffe-eau thermodynamique selon la technique antérieure.

Le but de la présente invention est de remédier au moins partiellement à ces inconvénients.

### Exposé de l'invention

À cet effet, l'invention a pour objet une installation de chauffage d'eau, notamment d'eau sanitaire, comportant un chauffe-eau muni d'un réservoir d'eau, ainsi qu'un système de pompe à chaleur muni d'un condenseur, un évaporateur, et un compresseur, l'installation de chauffage étant délimitée par un habillage extérieur muni d'une partie haute, d'une partie basse et d'une partie latérale, l'installation comprenant un compartiment de logement du réservoir d'eau, dit compartiment chauffe-eau, et un compartiment de logement de l'évaporateur, du compresseur et du ventilateur, dit compartiment pompe à chaleur, l'installation comprenant également une interface de séparation entre lesdits compartiments chauffe-eau et pompe à chaleur, ladite interface présentant une forme générale de cuvette comportant une portion de fond et une portion de jonction avec l'habillage extérieur de l'installation, ladite portion de jonction étant solidaire de la partie latérale de l'habillage extérieur.

Ainsi, grâce à la présente invention, le système de pompe à chaleur est intégré partiellement dans le corps de l'habillage du chauffe-eau thermodynamique, ce qui assure à la fois un accès facilité par le compartiment pompe à chaleur dédié d'une part, et un fonctionnement optimisé même sur air ambiant, du fait de l'étanchéité améliorée par les deux compartiments.

Selon un autre aspect, l'un au moins de l'évaporateur et du compresseur repose sur la portion de fond.

Selon un autre aspect, le condenseur comprend un élément enroulé autour du réservoir.

Selon un autre aspect, l'installation comprend une entrée d'air et une sortie d'air, la sortie d'air comprenant avantageusement des orifices de passage d'air.

Selon un autre aspect, au moins l'une de l'entrée d'air et de la sortie d'air est disposée dans la partie latérale.

Selon un autre aspect, la sortie d'air est disposée dans la partie latérale.

Selon un autre aspect, la portion de fond est plane, s'étendant horizontalement dans une position de service de l'installation ou s'étendant selon un angle inférieur à 30° avec une direction horizontale dans la position de service de l'installation.

Selon un autre aspect, la portion de fond est agencée libre ou solidaire de l'habillage extérieur.

Selon un autre aspect, la portion de jonction comprend une paroi s'étendant entre la portion de fond et l'habillage extérieur, la paroi étant disposée inclinée relativement à la portion de fond et à la partie latérale de l'habillage extérieur.

Selon un autre aspect, ladite paroi comprend un rebord de solidarisation de la portion de jonction à l'habillage extérieur.

### Brève description des dessins

D'autres caractéristiques, détails et avantages de l'invention apparaîtront à la lecture de la description détaillée ci-après, et à l'analyse des dessins annexés, sur lesquels :
[Fig. 1] représente schématiquement une vue en coupe longitudinale partielle d'une installation de chauffage d'eau selon la présente invention ;
[Fig. 2] illustre schématiquement une vue en coupe longitudinale partielle de l'installation de la figure 1 selon une première variante de réalisation, certains éléments étant omis ;
[Fig. 3] illustre schématiquement une vue en coupe longitudinale partielle de l'installation de la figure 1 selon une deuxième variante de réalisation, certains éléments étant omis ; et
[Fig. 4] illustre schématiquement une vue en coupe longitudinale partielle de l'installation de la figure 1 selon une troisième variante de réalisation, certains éléments étant omis.

### Description de modes de réalisation

Comme il ressort des figures, l'invention a pour objet une installation de chauffage d'eau, notamment d'eau sanitaire, référencée 1. L'eau chauffée est destinée à alimenter un réseau de conduits d'une habitation.

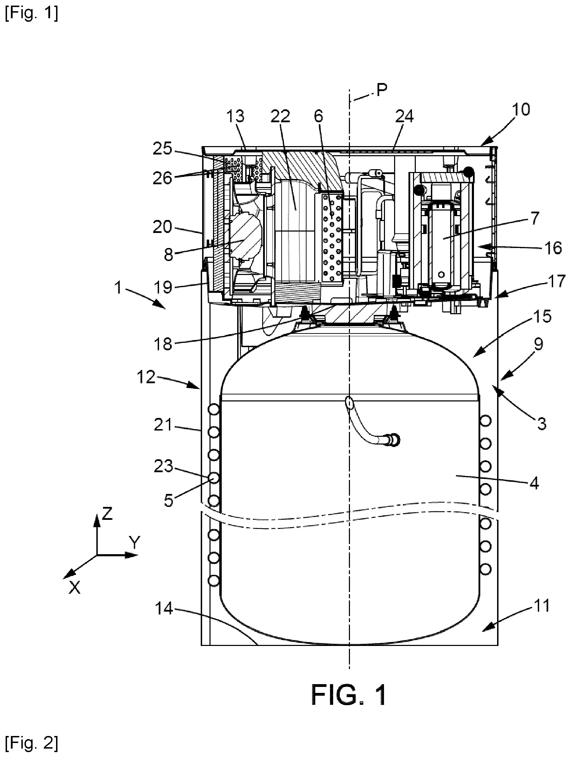

On note que les figures 1 à 4 illustrent l'installation 1 dans une position de service, qui correspond à une position dans laquelle l'installation 1 est disposée dans ou aux alentours de l'habitation, de préférence dans un local abrité, prête à fonctionner.

Pour simplifier le repérage dans l'espace, on a dessiné sur les figures un triplet d'axes orthogonaux (X, Y, Z), les axes X et Y étant horizontaux tandis que l'axe Z est vertical, dans la position de service de l'installation.

On note P un plan parallèle à (Y, Z) et comprenant un axe central L s'étendant verticalement.

Comme également illustré, l'installation 1 comprend un système de pompe à chaleur 2 ainsi qu'un chauffe-eau 3.

Le chauffe-eau 3 est muni d'un réservoir d'eau 4, dont l'eau est chauffée par le système de pompe à chaleur 2, ainsi qu'il sera détaillé ultérieurement.

Le système de pompe à chaleur 2 est muni d'un condenseur 5, d'un évaporateur 6, d'un compresseur 7, et d'un ventilateur 8 de mise en mouvement d'un flux d'air.

Sur le mode de réalisation illustré, le ventilateur fait partie intégrante du système de pompe à chaleur. Néanmoins, l'invention n'est pas limitée à cette configuration et, dans certains cas, il peut apparaître que l'air est déplacé par un moyen de circulation d'air qui ne soit pas intégré directement dans le produit. C'est le cas notamment quand l'installation est connectée à un flux d'air du logement, comme une ventilation mécanique contrôlée (VMC) d'un habitat individuel ou une circulation d'air de logements collectifs.

Le système de pompe à chaleur comprend également un détendeur, non illustré.

De façon connue, le ventilateur 8 conduit le flux d'air dans l'installation 1 afin de réchauffer un fluide frigorigène circulant dans une boucle thermodynamique formé par le système de pompe à chaleur 2. Sur la figure 1, le ventilateur 8 est monté aspirant. Dans la boucle, le flux d'air décharge ses calories dans l'évaporateur 6, où circule le fluide frigorigène, tandis que le fluide frigorigène échange tout ou partie des calories qu'il contient dans le condenseur, ce qui réchauffe l'eau stockée dans le réservoir 4.

Comme visible sur les figures, l'installation 1 comprend un habillage extérieur 9 délimité par une partie haute 10, d'une partie basse 11 et une partie latérale 12.

Chacune des parties haute 10 et basse 11 comprend une paroi plane, horizontale, référencée 13 et 14 respectivement, les parois 13 et 14 étant opposées. La partie latérale 12 est solidaire des parois 13 et 14. La partie latérale 12 peut être de section circulaire ou rectangulaire. Quand elle est de section circulaire, la partie latérale 12 comprend une paroi cylindrique. Quand elle est de section rectangulaire, la partie latérale 12 comprend deux paires de parois opposées de sorte à constituer un pavé ouvert.

Comme également illustré, l'installation 1 comprend un premier compartiment, dit compartiment chauffe-eau, référencé 15, et un deuxième compartiment, dit compartiment pompe à chaleur, référencé 16.

Le compartiment chauffe-eau 15 permet de loger le réservoir d'eau 4 tandis que le compartiment pompe à chaleur 16 permet de loger des éléments du système 2, comme il sera détaillé ultérieurement.

L'installation 1 comprend également une interface 17 de séparation entre les compartiments 15 et 16 qui présente une forme générale de cuvette.

Comme illustré sur les figures 1 à 4, la cuvette 17 comporte une portion de fond 18 et une portion de jonction 19 avec l'habillage extérieur 9. La portion de jonction 19 est solidaire de la partie latérale 12, à l'exclusion des parties haute et basse, 10 et 11.

L'interface 17 sous forme de cuvette assure une réduction de hauteur du compartiment pompe à chaleur 16, ce qui rend l'installation 1 plus compacte et en améliore également l'esthétique globale. De plus, l'interface 17 sous forme de cuvette permet d'optimiser l'étanchéité entre les éléments de chauffe-eau et les éléments de la pompe à chaleur et qui réduit les contraintes aérauliques et vibratoires de l'installation 1. Ainsi, les performances de l'installation sont améliorées, de même que le confort des occupants de l'habitation.

Le compartiment 16 est disposé au-dessus du compartiment 15 dans la position de service de l'installation 1.

Le compartiment pompe à chaleur 16 est délimité par la paroi 13 de la partie haute 10, une portion haute 20 de la paroi latérale 12 et l'interface 17.

Le compartiment 16 comprend l'évaporateur 6, le compresseur 7, le ventilateur 8 ainsi qu'une volute 22 associée au ventilateur 8.

Comme il ressort de la figure 1, au moins l'évaporateur 6 et le compresseur 7 reposent avantageusement sur la portion de fond 18 de la cuvette 17. Le ventilateur 8 peut reposer également sur la portion de fond 18, ou, alternativement, ne repose pas directement sur la portion de fond 18 et est mis en place (glissé, encliqueté ...) dans une pièce intermédiaire, telle qu'un conduit aéraulique qui repose quant à elle sur le fond 18 ou est fixée à l'évaporateur 6.

Le compartiment chauffe-eau 15 est délimité par la paroi 14 de la partie basse 11 et une portion basse 21 de la paroi latérale 12.

Le compartiment 15 comprend le réservoir d'eau 4 ainsi que, de préférence, un élément 23 du condenseur 5 enroulé autour du réservoir d'eau 4 (figure 1) ou immergé dans le réservoir d'eau 4 (alternative non illustrée). Dans le cas où il entoure la cuve, l'élément 23 peut être un tube enroulé ou un panneau ou encore un ensemble de ceintures fines à l'intérieur duquel passe le fluide frigorigène. Les ceintures fines offrent un meilleur rendement quantité de fluide sur surface d'échange.

Comme particulièrement visible sur la figure 1, le compartiment pompe à chaleur 16 comprend une entrée d'air 24 et une sortie d'air 25, de préférence conçues pour permettre un débit d'air souhaité tout en limitant la perte de charge induite. La sortie d'air 25 est de préférence munie d'une pluralité de perçages 26.

Sur la figure 1, l'entrée d'air 24 est disposée dans la paroi haute 13 de la partie haute 10 tandis que la sortie d'air 25 est disposée dans la partie latérale 12. L'agencement orthogonal de l'entrée 24 et de la sortie 25 permet d'éviter toute recirculation d'air dans le compartiment 16.

Bien entendu, on peut envisager une alternative selon laquelle la sortie d'air 25 est disposée dans la paroi haute 11 tandis que l'entrée d'air 24 est disposée dans la partie latérale 12, qui évite également toute recirculation d'air dans le compartiment 16.

Selon une variante non illustrée, les deux entrée et sortie, 24, 25, sont disposées dans la partie latérale 12, par exemple en étant montées opposées, ce qui évite aussi la recirculation d'air.

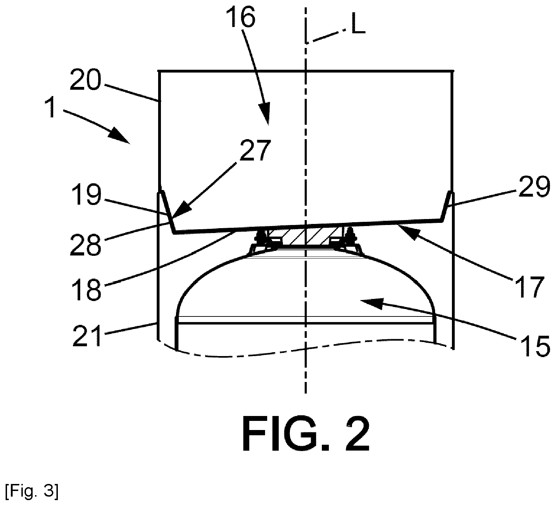

Sur les figures 1, 3 et 4, la portion de fond 18 est plane et horizontale, s'étendant dans un plan parallèle au plan (X,Y). Sur la variante de la figure 2, la portion de fond 18 plane s'étend dans un plan incliné par rapport au plan (X, Y). Cette variante est avantageuse pour l'évacuation des condensats. L'angle d'inclinaison est de préférence compris entre 2° et 30° par rapport à la direction X.

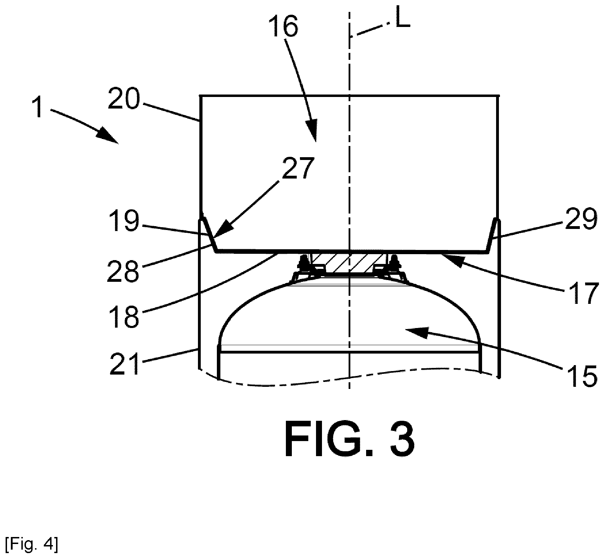

Sur les figures 1, 2 et 4, la portion de jonction 19 comprend une paroi 27 inclinée par rapport à au plan (Y, Z). Sur les figures, en section longitudinale passant par l'axe central L de l'installation, la paroi comprend deux tronçons 28, 29. Les deux tronçons 28, 29 sont de préférence symétriques l'une de l'autre par rapport au plan P. La portion de fond 18 s'étend dans la partie latérale 12 sans atteindre de part et d'autre la partie latérale 12. Sur la figure 3, la portion de jonction 19 s'étend parallèlement au plan (Y, Z), la portion de fond 18 plane s'étendant depuis un côté de la partie latérale 12 jusqu'au côté opposé de la partie latérale 12.

Sur la variante de la figure 3, la portion de fond 18 est encliquetée dans la portion basse 21. Sur la figure 1, la portion de fond 18 est agencée libre dans l'habillage extérieur 9.

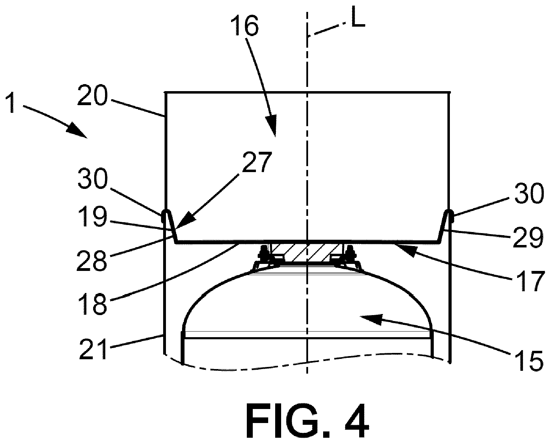

Sur la variante de la figure 4, une extrémité 30 de la paroi 27 comprend un rebord de solidarisation de l'interface 17 à la partie latérale 12. Le rebord présente avantageusement la forme d'un crochet conformé pour s'insérer dans un orifice associé de la partie latérale 12.

Comme il ressort déjà de la description qui précède, la présente invention consiste en l'intégration partielle du système pompe à chaleur dans le corps de l'habillage d'un chauffe-eau thermodynamique monobloc grâce à l'interface en forme de cuvette 17.

Le plan de dépose du système de pompe à chaleur 2 se trouve ainsi sous le point le plus haut du compartiment 15 logeant le réservoir d'eau 4 et jouit ainsi de plusieurs qualités propres à cette installation, parmi lesquelles :
- réduction de la hauteur des pièces de capotage pompe à chaleur (réduction quantité de matière, baisse des coûts, réduction des contraintes physiques sur cette pièce...) ;
- amélioration de l'étanchéité entre les compartiments, ce qui améliore les performances acoustiques et facilite l'atteinte de niveaux d'étanchéité requis pour les produits neufs ;
- guidage du flux d'air dans le compartiment 16 depuis l'entrée 24 jusqu'à la sortie 25 ;
- exploitation de l'isolation thermique du chauffe-eau 4 en partie périphérique basse du système de pompe à chaleur 2 ;
- amélioration de la discrétion du système de pompe à chaleur 2.

L'installation 1 permet également la mise en place d'huis pour le flux d'air en partie périphérique du compartiment pompe à chaleur 16 (limitant ainsi les contraintes d'installation client).

L'installation avec compartiment pompe à chaleur 16 semi intégré selon permet, en plus des avantages cités précédemment, d'intégrer des fonctions multiples : support de maintien pour capotage, évacuation des condensats, fixation des éléments pompe à chaleur et autres ...

De plus, la présente invention permet d'optimiser le volume l'installation, tant au niveau du chauffe-eau thermodynamique en tant que tel que dans son intégration avec des conduits d'air. La présente invention s'intègre directement au produit et limite la mise en place d'accessoires supplémentaires ou de modules de conduits d'air (droits ou coudés). La présente invention permet d'offrir plusieurs positions de gestion d'air acceptées par la conception du produit et d'empêcher des montages non autorisés. La présente invention permet plusieurs montages pour un même produit, en fonction des produits et des installations. La présente invention est démontable et permet pour un même produit d'être installé dans diverses configurations. La présente invention permet de personnaliser à moindre coût différents chauffe-eau thermodynamiques résultant de conception proche, par l'utilisation d'autres couleurs, d'autres matériaux ou de modifications dans l'outillage de réalisation de la pièce.

## Revendications

1. Installation de chauffage d'eau, notamment d'eau sanitaire, comportant un chauffe-eau (3) muni d'un réservoir d'eau (4), ainsi qu'un système de pompe à chaleur (2) muni d'un condenseur (5), un évaporateur (6), un compresseur (7), l'installation de chauffage (1) étant délimitée par un habillage extérieur (9) muni d'une partie haute (10), d'une partie basse (11) et d'une partie latérale (12), l'installation de chauffage (1) comprenant un compartiment de logement du réservoir d'eau, dit compartiment chauffe-eau (15), et un compartiment de logement de l'évaporateur et du compresseur, dit compartiment pompe à chaleur (16), l'installation de chauffage (1) comprenant également une interface (17) de séparation entre lesdits compartiments chauffe-eau et pompe à chaleur (15, 16),
**caractérisée en ce que** ladite interface (17) présente une forme générale de cuvette comportant une portion de fond (18) et une portion de jonction (19) avec l'habillage extérieur (9) de l'installation (1), ladite portion de jonction (19) étant solidaire de la partie latérale (12) de l'habillage extérieur (9).

2. Installation selon la revendication 1, dans laquelle l'un au moins de l'évaporateur (6) et du compresseur (7) repose sur la portion de fond (18).

3. Installation selon l'une des revendications 1 ou 2, dans laquelle le condenseur (5) comprend un élément (23) enroulé autour du réservoir d'eau (4).

4. Installation selon l'une des revendications précédentes, comprenant une entrée d'air (24) et une sortie d'air (25), la sortie d'air (25) comprenant avantageusement des orifices (26) de passage d'air.

5. Installation selon la revendication précédente, dans laquelle au moins l'une de l'entrée d'air (24) et de la sortie d'air (25) est disposée dans la partie latérale (12).

6. Installation selon la revendication précédente, dans laquelle la sortie d'air (25) est disposée dans la partie latérale (12).

7. Installation selon l'une des revendications précédentes, dans laquelle la portion de fond (18) est plane, s'étendant horizontalement dans une position de service de l'installation ou s'étendant selon un angle inférieur à 30° avec une direction horizontale dans la position de service de l'installation.

8. Installation selon l'une des revendications précédentes, dans laquelle la portion de fond (18) est agencée libre ou solidaire de l'habillage extérieur (9).

9. Installation selon l'une des revendications précédentes, dans laquelle la portion de jonction (19) comprend une paroi (27) s'étendant entre la portion de fond (18) et l'habillage extérieur (9) et disposée inclinée relativement à la portion de fond (18) et à la partie latérale de l'habillage extérieur (9).

10. Installation selon la revendication précédente, dans laquelle ladite paroi (27) comprend un rebord (30) de solidarisation de la portion de jonction (19) à l'habillage extérieur (9).

## Patentansprüche

1. Anlage zum Erwärmung von Wasser, insbesondere von Brauchwasser, umfassend einen Warmwasserbereiter (3), der mit einem Wassertank (4) versehen ist, sowie ein Wärmepumpensystem (2), das mit einem Kondensator (5), einem Verdampfer (6) und einem Kompressor (7) versehen ist, wobei die Erwärmungsanlage (1) durch eine Außenverkleidung (9) begrenzt ist, die mit einem oberen Teil (10), einem unteren Teil (11) und einem Seitenteil (12) versehen ist, wobei die Erwärmungsanlage (1) ein Abteil zur Aufnahme des Wassertanks, genannt Warmwasserbereiter-Abteil (15), und ein Abteil zur Aufnahme des Verdampfers und des Kompressors, genannt Wärmepumpenabteil (16), umfasst, wobei die Erwärmungsanlage (1) auch eine Schnittstelle (17) zur Trennung zwischen dem Warmwasserbereiter- und dem Wärmepumpenabteil (15, 16) umfasst,
**dadurch gekennzeichnet, dass** die Schnittstelle (17) eine allgemeine Schalenform aufweist, die einen Bodenabschnitt (18) und einen Verbindungsabschnitt (19) mit der Außenverkleidung (9) der Anlage (1) umfasst, wobei der Verbindungsabschnitt (19) fest mit dem Seitenteil (12) der Außenverkleidung (9) verbunden ist.

2. Anlage nach Anspruch 1, wobei wenigstens einer aus Verdampfer (6) und Kompressor (7) auf dem Bodenabschnitt (18) steht.

3. Anlage nach einem der Ansprüche 1 oder 2, wobei der Kondensator (5) ein Element (23) umfasst, das um den Wassertank (4) gewickelt ist.

4. Anlage nach einem der vorhergehenden Ansprüche, umfassend einen Lufteinlass (24) und einen Luftauslass (25), wobei der Luftauslass (25) vorteilhafterweise Luftdurchlassöffnungen (26) umfasst.

5. Anlage nach dem vorhergehenden Anspruch, wobei wenigstens einer aus Lufteinlass (24) und Luftauslass (25) in dem Seitenteil (12) angeordnet ist.

6. Anlage nach dem vorhergehenden Anspruch, wobei der Luftauslass (25) in dem Seitenteil (12) angeordnet ist.

7. Anlage nach einem der vorhergehenden Ansprüche, wobei der Bodenabschnitt (18) eben ist, sich in einer Betriebsstellung der Anlage horizontal erstreckt oder sich in der Betriebsstellung der Anlage in einem Winkel von weniger als 30° zu einer horizontalen Richtung erstreckt.

8. Anlage nach einem der vorhergehenden Ansprüche, wobei der Bodenabschnitt (18) frei oder fest mit der Außenverkleidung (9) verbunden angeordnet ist.

9. Anlage nach einem der vorhergehenden Ansprüche, wobei der Verbindungsabschnitt (19) eine Wand (27) umfasst, die sich zwischen dem Bodenabschnitt (18) und der Außenverkleidung (9) erstreckt und relativ zu dem Bodenabschnitt (18) und dem Seitenteil der Außenverkleidung (9) geneigt angeordnet ist.

10. Anlage nach dem vorhergehenden Anspruch, wobei die Wand (27) einen Rand (30) zur festen Verbindung des Verbindungsabschnitts (19) mit der Außenverkleidung (9) umfasst.

## Claims

1. An installation for heating water, in particular domestic water, including a water heater (3) provided with a water tank (4), as well as a heat pump system (2) provided with a condenser (5), an evaporator (6), a compressor (7), the heating installation (1) being delimited by an exterior cover (9) provided with an upper part (10), a lower part (11) and a lateral part (12), the heating installation (1) comprising a water tank housing compartment, called a water heater compartment (15), and an evaporator and compressor housing compartment, called heat pump compartment (16), the heating installation (1) also comprising an interface (17) for separation between said water heater and heat pump compartments (15, 16), **characterised in that** said interface (17) has the general shape of a bowl including a bottom portion (18) and a portion (19) for junction with the exterior cover (9) of the installation (1), said junction portion (19) being integral with the lateral part (12) of the exterior cover (9).

2. The installation according to claim 1, wherein at least one of the evaporator (6) and the compressor (7) rests on the bottom portion (18).

3. The installation according to one of claims 1 or 2, wherein the condenser (5) comprises an element (23) wound around the water tank (4).

4. The installation according to one of the preceding claims, comprising an air inlet (24) and an air outlet (25), the air outlet (25) advantageously comprising air passage orifices (26).

5. The installation according to the preceding claim, wherein at least one of the air inlet (24) and the air outlet (25) is disposed in the lateral part (12).

6. The installation according to the preceding claim, wherein the air outlet (25) is disposed in the lateral part (12).

7. The installation according to one of the preceding claims, wherein the bottom portion (18) is flat, extending horizontally in a service position of the installation or extending at an angle less than 30° with a horizontal direction in the service position of the installation.

8. The installation according to one of the preceding claims, wherein the bottom portion (18) is arranged free or integral with the exterior cover (9).

9. The installation according to one of the preceding claims, wherein the junction portion (19) comprises a wall (27) extending between the bottom portion (18) and the exterior cover (9) and disposed inclined relative to the bottom portion (18) and the lateral part of the exterior cover (9).

10. The installation according to the preceding claim, wherein said wall (27) comprises a rim (30) for securing the junction portion (19) to the exterior cover (9).
